# EUROPEAN PATENT APPLICATION

(11) **EP 2 902 989 A1**
(43) Date of publication of application: **05.08.2015**
(21) Application number: 15151691.1
(22) Date of filing: 19.01.2015
(51) Int. Cl.: G08G 5/00, G01C 23/00, G06F 3/0488

(54) **System and method to view, verify, and send datalink downlink messaging**

(30) Priority: 30.01.2014 US 201414168686
(71) Applicant: Honeywell International Inc., Morristown, NJ 07962-2245 (US)
(72) Inventor: Judy, Victoria, Morristown, NJ 07962-2245 (US); Pepitone, David, Morristown, NJ 07962-2245 (US)
(74) Representative: Houghton, Mark Phillip

(57) **Abstract**

An avionics messaging system is provided. In at least one embodiment, the avionics messaging system comprises: a user input device configured to receive input from a user, a memory device configured to store a plurality of pages where each page is comprised of one or more fields for receiving user input, a display unit, and a processing unit configured to segment a display on the display unit into a primary segment and a supplemental segment, wherein the primary segment and supplemental segment are displayed concurrently. Furthermore, the processing unit is configured to select one of the plurality of pages to display on the primary segment based on input received from the user input device and output one or more composition messages to the supplemental segment based on input received from the user input device via the one or more fields of the selected page displayed on the primary segment.

## Description

### BACKGROUND

Controller Pilot Data Link Communication (CPDLC) messages are used for communication between a pilot and air traffic control (ATC). A CPDLC application can provide a pilot with the capability to respond to messages, to request clearances and information, to report information, and to declare or rescind an emergency. When a pilot is compiling one or more requests or reports to downlink to ATC, existing CPDLC applications require accessing a separate screen from multiple screens used to create a request or a report downlink. After compiling the requests or reports from the multiple screens, verification of the complete downlink is required in a verify screen, prior to sending it to the ATC controller on the ground.

### SUMMARY

An avionics messaging system is provided. In at least one embodiment, the avionics messaging system comprises: a user input device configured to receive input from a user, a memory device configured to store a plurality of pages where each page is comprised of one or more fields for receiving user input, a display unit, and a processing unit configured to segment a display on the display unit into a primary segment and a supplemental segment, wherein the primary segment and supplemental segment are displayed concurrently. Furthermore, the processing unit is configured to select one of the plurality of pages to display on the primary segment based on input received from the user input device and output one or more composition messages to the supplemental segment based on input received from the user input device via the one or more fields of the selected page displayed on the primary segment.

### DRAWINGS

The drawings depict only exemplary embodiments and are not therefore to be considered limiting in scope. The exemplary embodiments will be described with additional specificity and detail through the use of accompanying drawings, in which:
Figure 1 is a block diagram of an example embodiment of a system to view, verify, and send datalink downlink messaging.
Figures 2A-2G are block diagrams of one embodiment of an exemplary display used in the system of Figure 1 to view, verify, and send datalink downlink messaging.
Figure 3 is a flow chart depicting one embodiment of a method of communicating datalink downlink messages.
In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration, specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following description is, therefore, not to be taken in a limiting sense.

The embodiments described herein relate to improving the Human-Machine Interface (HMI) in avionic devices, reducing pilot heads down time, and making it easier for the pilot to process complex flight plan modifications and route clearance downlinks. In particular, in a conventional system, when a pilot is preparing an air traffic control (ATC) message downlink, the pilot has to access multiple screens to create the message for downlink. Once the composed message is complete and ready for downlink, before sending the downlink, the pilot accesses a verify screen to verify the composed message. If there are any changes to the composed message, the pilot has to go to back to the screen where the message was created to change the message, and then go back to the verify screen before sending the composed message. The embodiments described herein solve this problem by eliminating the need to navigate back and forth between the screens. The embodiments described herein accomplish this by introducing a supplemental verify screen that displays and updates, in approximately real time, the composed message concurrently with the screen that is used to create the individual messages, as described in more detail below.

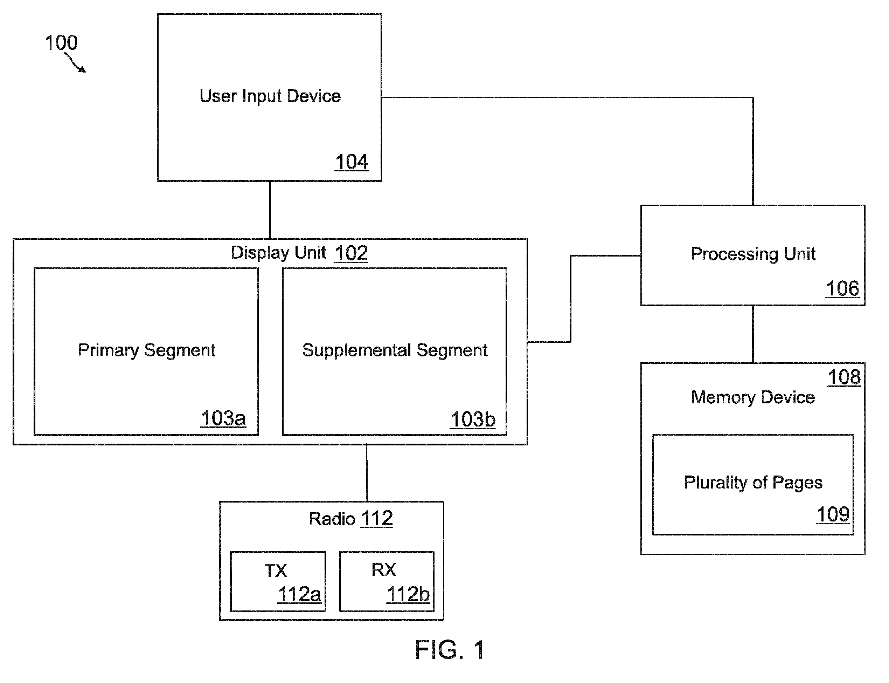

Figure 1 is a block diagram of an exemplary system 100 used to view, verify, and send datalink downlink messages. System 100 includes a user input device 104 configured to receive input from a user, a memory device 108 configured to store a plurality of pages 109 where each page is comprised of one or more fields for receiving user input, a display unit 102, and a processing unit 106. The processing unit 106 is configured to segment the display on the display unit 102 into a primary segment 103a and a supplemental segment 103b, wherein the primary segment and the supplement are displayed concurrently. In addition, the processing unit 106 is configured to select one of the plurality of pages 109 to display on the primary segment 103a based on input received from the user input device 104. The processing unit 106 is also configured to output one or more composition messages to the supplemental segment 103b based on input received from the user input device 104 via the one or more fields of the selected page displayed on the primary segment. Additionally, the processing unit 106 can be further configured to update one or more of the composition messages based on input received from the user input device 104 and transmit one or more of the one or more composition messages to a ground device, such as an ATC, or an intermediate device.

System 100 is also configured to receive various in-flight messages and send one or more of the composition messages directly or indirectly via a radio 112. The radio 112 includes a transmitter 112a configured to transmit signals and a receiver 112b configured to receive signals as known to one of skill in the art. As an example, in some embodiments, system 100 is used for transmission of Controller Pilot Data Link Communications (CPDLC) messages to exchange communication between an Air Traffic Controller (ATC) and a pilot. In particular, the display unit 102 displays the uplink, downlink, and sidelink pages 109 and the user input device 104 enables a user to navigate the menu structure of the pages 109 to respond to messages and/or to enter data.

The user input device 104 is configured to provide user selections and input to the processor 106. The user input device 104 can be implemented as, but is not limited to, keyboards, touch screens, microphones, cursor control devices, line select buttons, glareshield buttons, etc. In some embodiments, the user input device 104 comprises more than one type of input device. In addition, the user input device 104 and the display unit 102 can be implemented as a single device, such as in the case of a touch screen device, or a Multipurpose Control Display Unit (MCDU).

The display unit 102 can be implemented as any display unit which is capable of displaying graphical content. Suitable exemplary display units include, but are not limited to, a display associated with the Flight Management System (FMS)/Flight Management Computer (FMC) itself, a multifunction display (MFD), and/or a display associated with a Communications Management Unit (CMU)/Communications Management Function (CMF). Suitable technologies for implementing the display unit 102 include, but are not limited to, a cathode ray tube (CRT) display, an active matrix liquid crystal display (LCD), a passive matrix LCD, or plasma display unit.

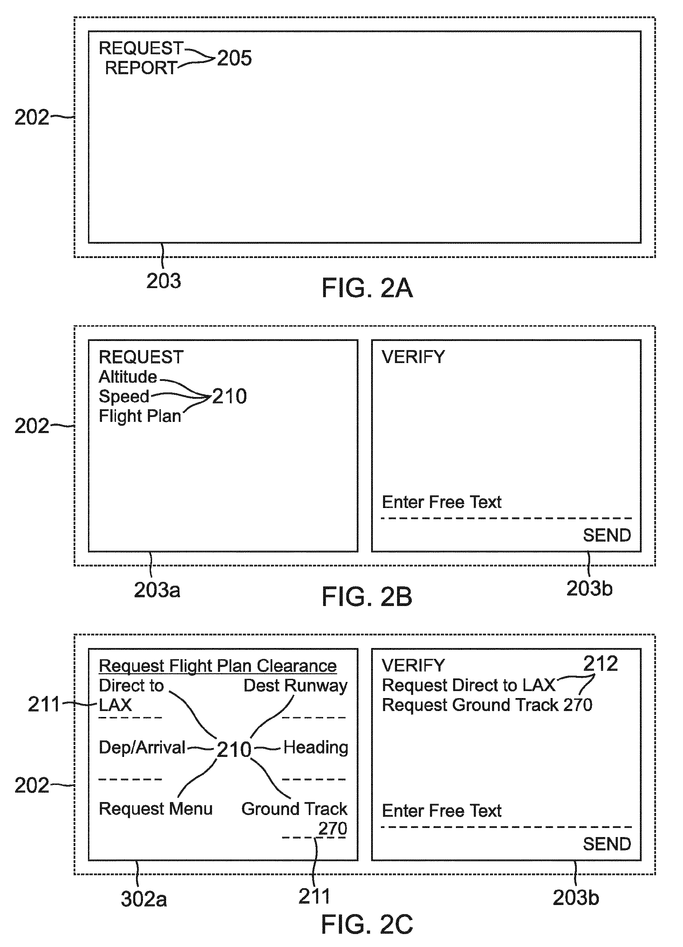

The processing unit 106 includes or functions with software programs, firmware or other computer readable instructions for carrying out various methods, process tasks, calculations, and control functions, used in providing a plurality of pages 109 to a user and transmitting the user's composed messages as described herein. Each page in the plurality of pages 109 is comprised of one or more fields for receiving user input and is described in more detail below. Further, as mentioned above, the processing unit 106 is configured to segment the display on the display unit 102 into a primary segment 103a and a supplemental segment 103b wherein the primary segment 103a and the supplemental segment 103b are display concurrently. In addition, the processing unit 106 is configured to select a page of the plurality of pages 109 to display on the primary segment 103a based on an input received from the user input 104 and to output one or more composition messages to the supplemental segment 103b based on an input received from the user input device 104 via the one or more fields of the selected page displayed on the primary segment 103a. The one or more composition messages correspond to one or more fields that are outputted to the primary segment 103a. That is, the one or more composition messages correspond to one or more fields by possibly being one or more of the fields outputted to the primary segment 103a that are selected by a user; or, the one or more composition messages can be a field selected by a user from the one or more fields outputted to the primary segment 103a with additional user input included. As noted above, these are just examples and not meant to be limiting. Additionally, the processing unit 106 is configured to update the one or more composition messages based on input received from the user input device 104 and transmit one or more of the composition messages. System 100 is configured to receive various in-flight messages and send one or more of the composition messages directly or indirectly via a radio 112. More detail about these configurations is described below with respect to Figures 2A-2G.

The processing unit's 106 instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link. For example, these instructions can be stored on a memory device 108.

Also stored in the memory device 108 is a plurality of pages 109, wherein each page is comprised of one or more fields for receiving user input. The plurality of pages 109 and the fields which comprise the pages can be determined by a standards organization or a regulatory agency. For example, the Federal Aviation Administration (FAA) has defined over 150 CPDLC messages for use on aircraft flying within the United States of America. The FAA will also likely add additional messages in the future. Similarly, Eurocontrol, the European Organization for the Safety of Air Navigation, has defined a plurality of predefined CPDLC messages for the Link2000+ program used in Europe and will continue to add messages in the future. Either or both of these exemplary messages can be stored as fields on memory 108. These fields are arranged in a menu structure. An example of a menu structure for the fields can be found in a conventional CPDLC system.

Moreover, it is to be understood that each of the elements in system 100 can be implemented in separate devices. For example, in some embodiments, the processing unit 106 and memory device 108 are implemented in a Communication Management Unit (CMU) or Flight Management Computer (FMC) whereas the display unit 102 and the user input device 104 are implemented in a Human-Machine Interface (HMI) such as a Multifunction Control and Display Unit (MCDU) or Multi-input Interactive Display Unit (MIDU) coupled to the CMU or FMC. The display unit 102 can be associated with a primary flight display (PFD) or an engine-indicating and crew-alerting system (EICAS) display.

As mentioned above, a CPDLC application can provide a pilot with the capability to respond to messages, to request clearance and information, to report information, and to declare or rescind an emergency. Figures 2A-2G are block diagrams of one embodiment of an exemplary display used in the system of Figure 1 to view, verify, and send datalink downlink messaging. Moreover, the pages that are comprised of fields 210 discussed in Figures 2A-2G are elements of the plurality of pages 109 discussed in Figure 1 above and are arranged in a menu structure that will be evident from the discussion below.

To begin creating a composition message, a pilot decides what type of composition message he/she would like to compose by selecting, in the display 203 of the display unit 202, a hierarchical menu structure 205. In some embodiments, selecting a hierarchical menu structure 205 can cause a processing unit 106 to segment the display 203 on the display unit 202 into a primary segment 203a and a supplemental segment 203b as shown in Figure 2B. In other embodiments, the display 203 on the display unit 202 can be segmented into a primary segment 203a and a supplemental segment 203b as a default configuration prior to selection of a hierarchical menu structure 205.

As noted above, a page comprised of fields 210 is selected by a processing unit 106 to display on the primary segment 203a based on input received from the user input device 104. The page from the plurality of pages 109 that will be displayed depends on the hierarchical menu structure 205 chosen. In an example embodiment, selecting the "REQUEST" hierarchical menu structure 205 in Figure 2A can cause the page comprised of the fields 210 "Altitude", "Speed" and "Flight Plan", shown in Figure 2B, to be displayed on the primary segment 203a. As mentioned, the input received from the user input device 104 that will cause the processing unit 106 to segment the display unit 202 into a primary segment 203a and a supplemental segment 203b is not limited to "REQUEST" or "REPORT". Moreover, "Altitude", "Speed" and "Flight Plan" are just examples of what could be displayed after "REQUEST" is selected and are not meant to be limiting. As mentioned above, the page comprised of fields 210 that is outputted to the primary segment 203a is used to create a composition message in the supplemental segment 203b.

After the processing unit 106 selects a page comprised of fields 210, based on input received from the user input device, to display on the primary segment 203a, then the processing unit 106 can output one or more composition messages to the supplemental segment 203b based on input received from a user input device 104 via the one or more fields of the selected page displayed on the primary segment 203a. The one or more composition messages correspond to one or more fields 210 that are selected by the user from the one or more fields 210 outputted to the primary segment 203a and are formatted for transmission. Moreover, a user can add text to the selected fields 210 either in one or both the primary segment and the supplemental segment. In an example, a pilot wants to request a direct flight path to Los Angeles Airport (LAX). The pilot does this by selecting "Flight Plan" in Figure 2B. When the pilot selects "Flight Plan", the processing unit 106 selects a page comprised one or more fields 210 to display on the primary segment 203a according to the menu structure for the predefined avionic message elements 210 as shown in Figure 2C.

On the primary segment 203a, the pilot then inputs the flight plan request using the fields 210. That is, the pilot selects the field 210 "Direct to" and enters the text 211 "LAX". Moreover, the pilot selects the field 210 "Ground Track" and enters the text "270". On the supplemental segment 203b, the processor 106 outputs the composition message 212 based on this input received from the pilot in the primary segment 203a. That is, in this example, the composition message 212 output was the pilot's request to fly direct to LAX with ground track 270, as shown in Figure 2C.

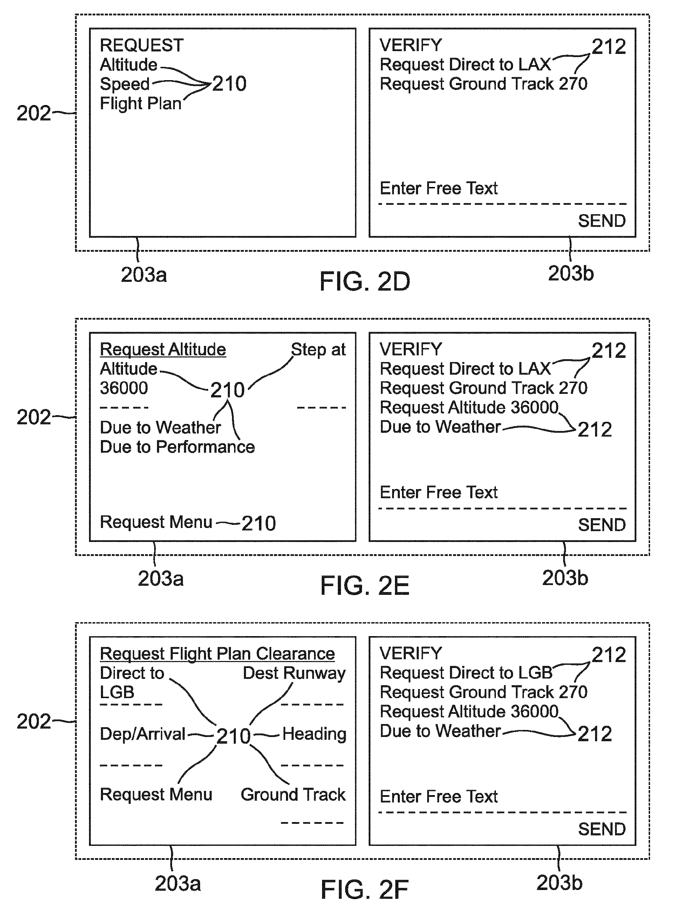

If, after selecting a flight path to LAX, a pilot wanted to make an additional request, the pilot could navigate back to the initial request menu by selecting "Request Menu" in the primary segment 203a of Figure 2C. Once the pilot does this, the processor 106 selects the page to display on the primary segment 203a that corresponds to the selection of "Request Menu". The page that is displayed once a user selects "Request Menu" is determined by the menu structure for the pages, as shown in Figure 2D. The pilot can then make an additional request, such as requesting a different altitude by selecting the field 210 "Altitude" in Figure 2D. The processor 106 will then output the page comprised of fields 210 that corresponds with that request, as shown in Figure 2E. In this example, the pilot enters the text "36000" to make the altitude request of 36000 feet in the primary segment 203a and selects the reason, "Due to Weather". The processor 106 then outputs the composition message 212 in the supplement segment 203b that corresponds to this altitude request, as shown in Figure 2E.

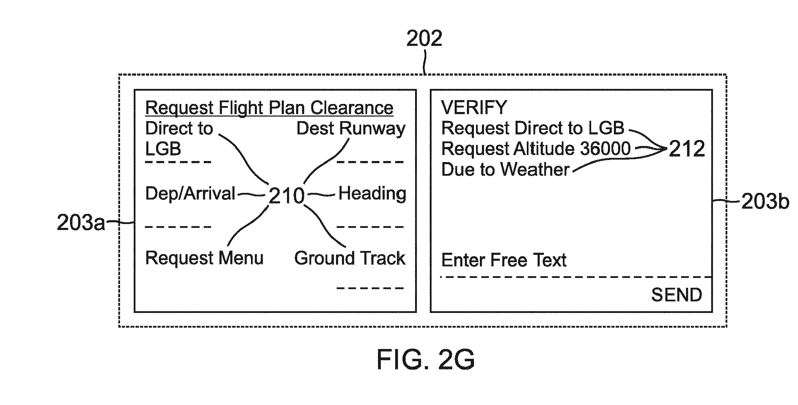

After the processing unit 106 outputs one or more composition messages 212 to the supplemental segment 203b, the processing unit 106 can be further configured to update the one or more composition messages 212 based on input received from the user input device 104. These updates may include, but are not limited to, selecting and deleting a previous composition message 212 or selecting and modifying a previous composition message 212. In the example discussed above, the pilot made compiled a request to fly to LAX. If the pilot now would like to modify that composition message 212, he/she could do so by selecting the LAX composition message in Figure 2E. The processing unit 106 would then display on the primary segment 203a the page comprised of fields 210 that correspond to creating the selected composition message 212, which in this case is "Request Flight Plan", as shown in Figure 2F. In this example, the newly requested airport is Long Beach Airport, LGB, which is outputted to the supplemental segment 203b as shown in Figure 2G. Moreover, in an example and as described above, the updates may include deleting a previous composition message 212. In this case, the pilot would like to delete the composition message 212 for a Ground Track of 270, so the pilot selects the composition message 212 and removes it from the supplemental segment 203b, as shown in Figures 2F-2G. In some embodiments, the button to "delete" or "remove" a composition message 212 can be displayed on the display unit 102, such as in the supplemental display 203b or the primary display 203a. In other embodiments, the "delete" or "remove" button can be a button external to the display unit 102.

After a pilot finishes a composition message 212, he/she can transmit the one or more composition message 212. In the example discussed above, the composition messages 212 are complete, so the pilot can then send the composition messages 212 to a ground device, such as an air traffic controller (ATC), or intermediate device by pressing a "send" button as shown in Figure 2G. In an alternative embodiment, a pilot can selectively transmit a single composition message in the supplemental segment by first selecting the corresponding composition message in the supplemental segment and then pressing a "send" button, for example. In some embodiments, the "send" button can be displayed on the display unit 102, such as in the supplemental display 203b or the primary segment 203a. In other embodiments, the "send" button can be a button external to the display unit 102.

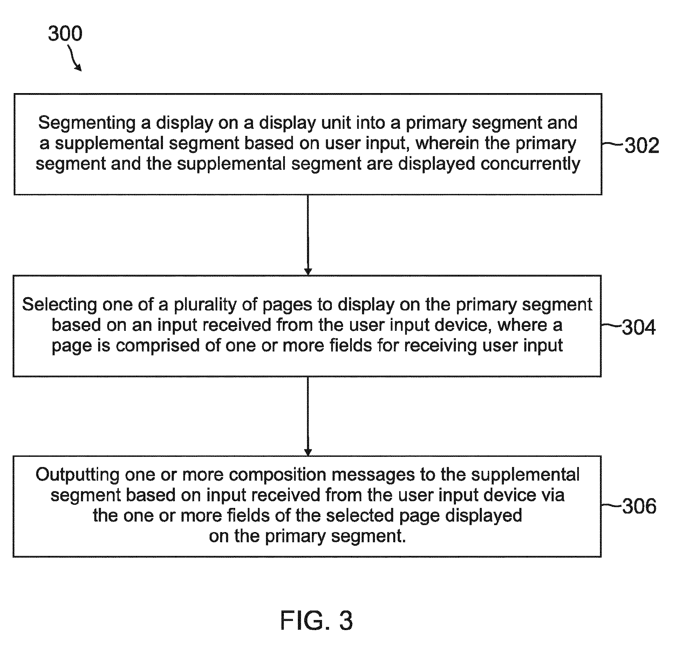

Figure 3 is a flow chart depicting an exemplary method 300 for avionics' communication display and composition. Method 300 can be implemented with an avionics messaging system such as the avionics messaging system 100 described above. At block 302, a display on a display unit is segmented into a primary segment and a supplemental segment, wherein the primary segment and the supplemental segment are displayed concurrently. In some embodiments, selecting a hierarchical menu structure can cause the display on the display unit to segment into a primary segment and a supplemental segment as discussed above in Figure 2B. In other embodiments, the display on the display unit can be segmented into a primary segment and a supplemental segment as a default configuration prior to selection of a hierarchical menu structure. At block 304, one of a plurality of pages is selected to be displayed on the primary segment based on input received from a user input device, where each page is comprised of one or more fields for receiving input. The plurality of pages and fields that comprise each page can have the same content and structure as described above with respect to Figures 1 and 2. For example, if the pilot has chosen to compile a request and the pages have the same structure as the ones discussed above in Figures 2A-2G, then the primary segment displays the page with fields such as "altitude", "speed", and "flight plan" as shown in Figure 2B.

At block 306, one or more composition messages are outputted to the supplemental segment based on input received from the user input device. The one or more composition messages correspond to one or more of the plurality of fields that are selected using a user input device from the one or more fields displayed on the primary segment. That is, as discussed above, the one or more composition messages correspond to a field by possibly being one or more of the fields outputted to the primary segment that are selected by a user; or, the one or more composition messages can be a field selected by a user from the one or more fields outputted to the primary segment with additional user input included. As noted above, these are just examples and not meant to be limiting. In an example, the composed messages shown in Figure 2E above are the "Request Direct to LAX", "Request Ground Track 270", and Request Altitude 36000 Due to Weather". However, it is to be understood that these are provided by way of example and not by way of limitation. In particular, the specific composed message and user input values can vary based on user input and the specific implementation.

Moreover, the page comprised of fields that are displayed on the primary segment or the composition messages that are the outputted to the supplemental segment can be updated based on user input. For example, as described above, a pilot could update his/her request to fly direct to a specific airport as shown in Figure 2E. In particular, the pilot is able to update the composition messages by selecting and modifying the composition message to be updated. For example, as described above with respect to Figure 2E, the pilot selects "Request Direct to LAX" in the supplemental segment. Selection of a composition message in the supplemental segment causes the primary segment to display the corresponding message composition screen as shown in Figure 2E-2F. The pilot or user then creates the modified composition message in the primary segment from the predefined avionic message elements which is then output to the supplemental segment.

Once the composition messages are compiled, one or more of the composition messages can be transmitted. For example, once a user determines that the composition messages are complete and accurate, the user can provide input via the supplemental segment or external input device to transmit the all of the composition messages, such as by pressing a "send" button. In an alternative embodiment, a pilot can selectively transmit a single composition message in the supplemental segment by first selecting the corresponding composition message in the supplemental segment and then pressing a "send" button, for example. The "send" button can have some or all of the same features as discussed in Figure 2 above.

### EXAMPLE EMBODIMENTS

Example 1 includes an avionics messaging system comprising: a user input device configured to receive input from a user; a memory device configured to store a plurality of pages, where each page is comprised of one or more fields for receiving user input; a display unit; and a processing unit configured to segment a display on the display unit into a primary segment and a supplemental segment; wherein the primary segment and the supplemental segment are displayed concurrently; wherein the processing unit is further configured to select one of the plurality of pages to display on the primary segment based on input received from the user input device; and wherein the processing unit is further configured to output one or more composition messages to the supplemental segment based on input received from the user input device via the one or more fields of the selected page displayed on the primary segment.

Example 2 includes the avionics messaging system of Example 1, wherein the processing unit is further configured to allow text to be input into one or both of the primary segment and the supplemental segment.

Example 3 includes the avionics messaging system of any of Examples 1-2, wherein the processing unit is further configured to transmit one or more of the one or more composition messages to an air traffic controller (ATC).

Example 4 includes the avionics messaging system of any of Examples 1-3, wherein an input received from the user input device that causes the processor to segment the display unit into a primary segment and a supplemental segment includes the input to make a request or a report.

Example 5 includes the avionics messaging system of any of Examples 1-4, wherein an input received from the user input device that causes the processor to select one of the plurality of pages to display on the primary segment includes the input of selecting one or more of the one or more composition messages from the supplemental segment.

Example 6 includes the avionics messaging system of any of Examples 1-5, wherein the processing unit is further configured to update one or more of the one or more composition messages.

Example 7 includes the avionics messaging system of Example 6, wherein an input received from the user input device that causes the processor to update one or more composition messages includes the input of selecting and deleting one or more of the one or more composition messages outputted to the supplemental segment.

Example 8 includes the avionics messaging system of any of Examples 6-7, wherein an input received from the user input device that causes the processor to update one or more composition message includes the input of selecting and modifying one or more of the one or more composition messages outputted to the supplemental segment.

Example 9 includes a method for avionics' communication display, composition, and downlink comprising: segmenting a display on a display unit into a primary segment and a supplemental segment wherein the primary segment and the supplemental segment are displayed concurrently; selecting one of a plurality of pages to display on the primary segment based on an input received from the user input device, where each page is comprised of one or more fields for receiving user input; and outputting one or more composition messages to the supplemental segment based on input received from the user input device via the one or more fields of the selected page displayed on the primary segment.

Example 10 includes the method of Example 9, wherein an input that segments the display into a primary segment and a supplemental segment includes the input to make a request or a report.

Example 11 includes the method of any of Examples 9-10, further comprising transmitting one or more composition messages to an air traffic controller (ATC).

Example 12 includes the method of any of Examples 9-11, further comprising updating one or more composition messages.

Example 13 includes the method of Example 12, wherein an input that updates one or more composition messages includes selecting and deleting one or more of the one or more composition messages outputted to the supplemental segment.

Example 14 includes the method of any of Examples 12-13, wherein an input that updates one or more composition messages includes selecting and modifying one or more of the one or more composition messages outputted to the supplemental segment.

Example 15 includes a program product comprising a processor-readable medium on which program instructions are embodied, wherein the program instructions are configured, when executed by at least one programmable processor, to cause the at least one programmable processor to: segment a display on a display unit, that is coupled to the at least one programmable processor, into a primary segment and a supplemental segment, wherein the primary segment and supplemental segment are displayed concurrently; select one of a plurality of pages to display on the primary segment based on an input received from a user input device coupled to the at least one programmable processor, where each page is comprised of one or more fields for receiving user input; and output one or more composition message to the supplement segment based on input received from the user input device via the one or more fields of the selected page displayed on the primary segment.

Example 16 includes the computer program product of Example 15, wherein an input received from a user input device that causes the programmable processor to segment the display unit into a primary segment and a supplemental segment includes the input of selecting to make a request or a report.

Example 17 includes the computer program product of any of Examples 15-16, wherein the program instructions are further configured to cause the at least one programmable processor to transmit one or more composition messages to an air traffic controller (ATC).

Example 18 includes the computer program product of any of Examples 15-17, wherein the program instructions are further configured to cause the at least one programmable processor to update the one or more composition messages based on an input received from a user input device.

Example 19 includes the computer program product of Example 18, wherein an input received from the user input device that causes the programmable processor to update one or more composition messages includes the input of selecting and deleting one or more of the composition.

Example 20 includes the computer program product of any of Examples 18-19, wherein an input received from the user input device that causes the programmable processor to update one or more composition messages includes the input of selecting and modifying one or more of the composition messages.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An avionics messaging system comprising:
a user input device (104) configured to receive input from a user;
a memory device (108) configured to store a plurality of pages (109), where each page is comprised of one or more fields for receiving user input;
a display unit (102); and
a processing unit (106) configured to segment a display on the display unit into a primary segment (103a) and a supplemental segment (103b);
wherein the primary segment (103a) and the supplemental segment (103b) are displayed concurrently;
wherein the processing unit (106) is further configured to select one of the plurality of pages (109) to display on the primary segment (103a) based on input received from the user input device (104); and
wherein the processing unit (106) is further configured to output one or more composition messages to the supplemental segment (103b) based on input received from the user input device (104) via the one or more fields of the selected page displayed on the primary segment (103a).

2. The avionics messaging system of claim 1, wherein the processing unit (106) is further configured to allow text to be input into one or both of the primary segment (103 a) and the supplemental segment (103b).

3. The avionics messaging system of claim 1, wherein the processing unit (106) is further configured to transmit one or more of the one or more composition messages to an air traffic controller (ATC).

4. The avionics messaging system of claim 1, wherein an input received from the user input device (104) that causes the processor (106) to segment the display unit into a primary segment (103a) and a supplemental segment (103b) includes the input to make a request or a report.

5. The avionics messaging system of claim 1, wherein an input received from the user input device (104) that causes the processor (106) to select one of the plurality of pages (109) to display on the primary segment (103a) includes the input of selecting one or more of the one or more composition messages from the supplemental segment (103b).

6. The avionics messaging system of claim 1, wherein the processing unit (106) is further configured to update one or more of the one or more composition messages.

7. A method for avionics' communication display, composition, and downlink comprising:
segmenting a display on a display unit into a primary segment and a supplemental segment wherein the primary segment and the supplemental segment are displayed concurrently (302);
selecting one of a plurality of pages to display on the primary segment based on an input received from the user input device, where each page is comprised of one or more fields for receiving user input (304); and
outputting one or more composition messages to the supplemental segment based on input received from the user input device via the one or more fields of the selected page displayed on the primary segment (306).

8. The method of claim 7, wherein an input that segments the display into a primary segment and a supplemental segment includes the input to make a request or a report.

9. The method of claim 7, further comprising transmitting one or more composition messages to an air traffic controller (ATC).

10. The method of claim 7, further comprising updating one or more composition messages.
